# NEUE EUROPÄISCHE PATENTSCHRIFT

(11) **EP 0 457 861 B2**
(45) Veröffentlichungstag und Bekanntmachung des Hinweises auf die Entscheidung über den Einspruch: **01.03.2000**
(45) Hinweis auf die Patenterteilung: 29.06.1994
(21) Anmeldenummer: 90914894.2
(22) Anmeldetag: 18.10.1990
(51) Int. Cl.: E05F 15/14

(54) **SCHIEBETÜR**
SLIDING DOOR
PORTE COULISSANTE

(30) Priorität: 09.12.1989 DE 3940762
(43) Veröffentlichungstag der Anmeldung: 27.11.1991
(73) Patentinhaber: DORMA GmbH + Co. KG, 58256 Ennepetal (DE)
(72) Erfinder: HEIN, Christian, D-3012 Langenhagen (DE); THEILE, Ulrich, D-5800 Hagen (DE)
(74) Vertreter: Puschmann, Heinz H., Dipl.-Ing.(FH)
(86) Internationale Anmeldenummer: DE9000793
(87) Internationale Veröffentlichungsnummer: WO9109197

(56) Entgegenhaltungen:
- AU-A- 495 813
- AU-A- 570 637
- GB-A- 2 203 262
- Prospekt der Fa. RECORD: "Tür frei für den Fortschritt", "record Schiebetüren, die Lösung von heute für die Welt von morgen", Schiebetürautomaten Record STA 9 Electronic 502, Typ DSTA 9, Typ ESTA 9
- Prospekt der Fa. HEIN: "Automatic-Fluchtweg-Schiebetüranlagen", 9/89

## Beschreibung

Die Erfindung betrifft eine Schiebetür, bei der wenigstens ein Flügel mit einem von einem Getriebemotor über eine zwischengeschaltete elektromagnetische Kupplung angetriebenen Riementrieb gekuppelt ist, wobei der oder die Flügel außerdem mit einem durch die Schließbewegung des oder der Flügel mit Energie versorgten Hilfsantrieb verbunden ist, durch den infolge Stromlosstellung der elektromagnetischen Kupplung der oder die Flügel in Offenstellung überführbar ist, mit wenigstens einem Programmschalter, wenigstens einem Bewegungsmelder und einem Endschalter zur Aktivierung einer Standardsteuerung zur automatischen Bewegung des Türflügels sowie mit einer elektronischen Zusatzsteuerung in Form eines Türsicherheitsbausteines, der zwischen Bewegungsmelder, Programmschalter und Endschalter einerseits sowie der Standardsteuerung, der elektromagnetischen Kupplung und Anzeigeeinrichtungen andererseits geschaltet ist.

Gesteuerte Schiebetüren sind bekannt; so beschreibt die AU-B-570637 eine Schiebetür, welche mit einem Fahrflügel ausgerüstet ist und über einen elektrischen Antriebsmotor angetrieben wird. Bei jedem Schließvorgang der Tür wird ein Hilfsantrieb mit Energie, in Form einer zu spannenden Feder, versorgt. Durch einen Elektromagneten, der im stromlosen Zustand die Feder freigibt, wird der Türflügel in die Offenstellung gebracht. Eine Kontrolleinheit überwacht die Steuerung der Schiebetür.

Ferner ist ein Schiebetürautomat Typ DSTA 9/ESTA 9 der Firma record AG für Türautomation, CH-8600 Dübendorf entsprechend der eingangs erwähnten Schiebetür bekannt, der einen Motor, ein Steuergerät, einen Kraftspeicher zum selbsttätigen Öffnen der Tür bei Stromausfall und eine elektrische Verriegelungseinrichtung zum automatischen Abschließen der Tür durch einen Programmschalter aufweist, wobei als Auslöseorgane elektrische Kontaktelemente, eine Radarsteuerung, Reflex-Lichtschranken sowie andere Organe wie Schlüsselschalter, Druckschwellen u.a. verwendet sind.

Ein solcher Schiebetürautomat erlaubt eine Paniköffnung der gesteuerten Tür sowie eine kontrollierte Steuerung der automatischen Verriegelung, um bei Stromausfall die Tür frei bewegen zu können.

Die Aufgabe der Erfindung ist es, eine Schiebetür der eingangs genannten Art hinsichtlich ihrer Funktionssicherheit und der auf jeden Fall sicheren Überführung in eine Offenstellung im Gefahrenfall oder bei Funktionsstörung des Türbetätigungssystemes derart zu verbessern, daß sämtliche Funktionen der Tür überwacht werden. Dabei muß die Steuerung auch so ausgelegt sein, daß ein selbsttätiger Funktionstest des Hilfsantriebes möglich ist. Es soll dabei die Eigensicherheit der Überwachung der automatischen Schiebetür auf Öffnung nach einem Öffnungsimpuls des Bewegungsmelders und hinsichtlich des selbsttätigen Funktionstestes des Hilfsantriebes gegeben sein. Beim Auffahren der Tür auf ein Hindernis muß eine Störmeldung abgegeben werden und nach Beseitigung der Störung automatisch ein Funktionstest durchgeführt werden. Bei einem auftretenden Netzausfall muß bei Verwendung der Tür als Flucht- oder Rettungswegtür ein sofortiges Öffnen über den Hilfsantrieb sichergestellt und auch hier nach Beseitigung der Netzstörung ein Selbsttest der Tür automatisch durchgeführt werden.

Die Aufgabe wird erfindungsgemäß dadurch gelöst, daß der Türsicherheitsbaustein, dessen Steuerung nach einem Programmablauf durchgeführt wird, eine mit dem Bewegungsmelder verbundene Kopplerstufe aufweist, die einerseits mit einer Startlogik direkt und andererseits über zwei jeweils mit einem Timer ausgestattete Logikkanäle mit der Startlogik verbunden ist, und wobei sowohl der Programmschalter als auch der Endschalter einerseits über die Logikkanäle mit der Startlogik und andererseits über einen mehrstufigen Fail-Save-Vergleicher und nachgeschalteten Relais mit der elektromagnetischen Kupplung und den Anzeigeeinrichtungen verbunden sind sowie mit einem mit den Logikkanälen und mit dem Fail-Save-Vergleicher verbundenen, den Systemtakt erzeugenden Taktgenerator.

Über diesen Türsicherheitsbaustein läßt sich die Öffnung der Schiebetür z.B. bei Flucht- und Rettungswegtüren auf einen Öffnungsimpuls des Öffnungsmelders hin überwachen, indem dieser Impuls des Öffnungsmelders den Zeitablauf eines Timers startet. Dieser Impuls wird über die Startlogik an die Standardsteuerung der Schiebetür weitergegeben. Bevor die vorgegebene Zeit des Timers abgelaufen ist, muß bei zweiflügeligen mindestens ein Türflügel den zugehörigen Endschalter in Offenrichtung überfahren haben. Falls die vorbestimmte Zeit des Timers vor Überfahren des Endschalters durch den Türflügel abgelaufen ist, wird die elektromagnetische Kupplung abgeschaltet, so daß der Hilfsantrieb zur Überführung der Schiebetürflügel in die Offenstellung aktiviert wird.

Dieser Hilfsantrieb versucht nun aufgrund der Programmsteuerung die Tür zu öffnen. Kann die Tür geöffnet werden, so bleibt der Türflügel in der Offenstellung stehen und muß erst durch eine Aktivierung wieder geschlossen werden.

Ist es nicht möglich, die Tür automatisch zu öffnen, so wird über das Programm erneut der Türantrieb gestartet. Dieser versucht in der ihm vorgegebenen Zeit erneut die Tür zu öffnen. Gelingt dies nicht, so geht eine Fehlermeldung, akustisch und/oder optisch, an z.B. eine zentrale Schaltwarte. Gleichzeitig versucht jedoch die Tür aus eigenem Mittel in die Offenstellung zu gelangen. Diese Abläufe werden immer wieder neu gestartet. Bei der zuvor angesprochenen Funktionsweise handelt es sich um den Ablauf bei einer Flucht- und Rettungswegtür. Die gesamte Funktionssteuerung kann jedoch auch invertiert werden bei einer normalen Durchgangstür, so daß in diesem Fall die Tür immer sicher geschlossen wird.

Neben der Überwachung des Hilfsantriebes wird auch über den Programmablauf eine Überwachung des Hauptantriebes vorgenommen. Die gesamte Steuerung läuft über den Türsicherheitsbaustein ab, der gewährleistet, daß die Tür immer für den Benutzer das größtmögliche Maß an Sicherheit bietet.

Der Funktionsfest des Hilfsantriebes erfolgt selbsttätig in vorbestimmten Zeitabständen, die am Timer eingestellt werden können. Die Zeit zwischen zwei Funktionstestabläufen richtet sich nach dem verwendeten Energiespeicher, der in dieser Zeit z.B. wieder aufgeladen werden muß. Dazu ist die Betätigung des Programmschalters zum Einschalten der Schiebetür erforderlich, wobei in Schließlage der Türflügel die elektromagnetische Kupplung stromlos geschaltet wird und gleichzeitig der Timer für seinen Kurzzeitablauf gestartet wird. Der Hilfsantrieb wird dann als fehlerhaft erkannt, falls der Türflügel über den zugehörigen Endschalter nicht vor Ablauf der Kurzzeit hinausbewegt wird. Im Fehlerfall des Hilfsantriebes wird ein permanent anstehender Öffnungsimpuls an die Standardsteuerung abgegeben, wodurch der elektromagnetischen Kupplung Strom zugeführt wird. Falls durch überfahren des Türflügels der Endschalter betätigt wird, so wird nach der am Timer eingestellten kurzen Wartezeit die elektromagnetische Kupplung stromlos gestellt. Sollte der Endschalter jedoch nicht in der am Timer eingestellten mittleren Zeit überfahren werden, so wird wieder der Hilfsantrieb aktiviert. Diese Vorgänge wechseln so lange miteinander ab, bis die Tür die Offenposition erreicht hat, wobei der Endschalter überfahren sein muß.

Zur Eigensicherheit der Überwachung der Öffnungsbewegung der Schiebetür nach dem Öffnungsimpuls des Bewegungsmelders und zum selbsttätigen Funktionstest des Hilfsantriebes ist die gesamte Schaltung des Türsicherheitsbausteines und seiner Eingangsbeschaltungen (Programmschalter, Endschalter und Bewegungsmelder) eigensicher ausgelegt. Dies bedeutet, daß jeder sowohl in den Zuleitungen als auch in der Schaltung selbst auftretende Fehler immer zu einer Stromlosstellung der elektromagnetischen Kupplung führt und somit die Türflügel über den Hilfsantrieb geöffnet werden. Die logischen Abläufe der Öffnungsüberwachung und des selbsttätigen Funktionstests des Hilfsantriebes sind durch einen zweikanaligen Aufbau eigensicher gestaltet, da sich beide Logikkanäle gegenseitig überwachen.

Zur Entstörung der Schaltimpulse der Programmschalter und Endschalter ist der Türsicherheitsbaustein mit Eingangsfiltern ausgestattet, wovon der eine Eingangsfilter dem Programmschalter nachgeschaltet und den Logikkanälen vorgeschaltet ist, während der andere Eingangsfilter zwischen Endschalter und Logikkanäle sowie den Fail-Save-Vergleicher geschaltet ist.

Zur Versorgung der Schaltbauteile des Türsicherheitsbausteines enthält dieser ein Netzteil. Dieses Netzteil erzeugt die notwendigen Spannungen, um einen ordnungsgemäßen Sicherheitsbetrieb der Tür zu gewährleisten. Neben dem Netzteil ist ebenfalls ein Energiespeicher wie z.B. Akku oder Kondensator mit entsprechender Ladevorrichtung vorhanden.

Die grundlegende erfinderische Idee dieser Schiebetür ist unter anderem, eine Fluchtweg-Schiebetür zu schaffen, bei der jede innerhalb der Anlage und ihren Bedienelementen auftretende Störung angezeigt und die Tür anschließend in einen sicheren Zustand gebracht wird, so daß eine Begehung auch in jedem Fall ungehindert durchgeführt werden kann. Damit die Schiebetüranlage wieder verschlossen werden kann, muß jedoch die Störung behoben werden. Die Anzeige der Störung kann optisch oder akustisch an einer zentralen Stelle erfolgen.

Die Erfindung wird in einem schematisch dargestellten möglichen Ausführungsbeispiel auf den Zeichnungen nachfolgend näher erläutert. Es zeigen:
- Figur 1:: die Schiebetür schematisch in einer perspektivischen Ansicht mit Standardsteuerung und Türsicherheitsbaustein,
- Figur 2:: der motorische Antrieb der Schiebetürflügel in einer schematischen Darstellung
- Figur 3:: den mit einem Türflügel verbundenen Hilfsantrieb in schematischer Darstellung, wobei dieser vom Hilfsantrieb betätigte Türflügel über das in Fig. 2 dargestellte, motorisch betriebene Antriebsglied mit dem anderen Türflügel verbunden ist,

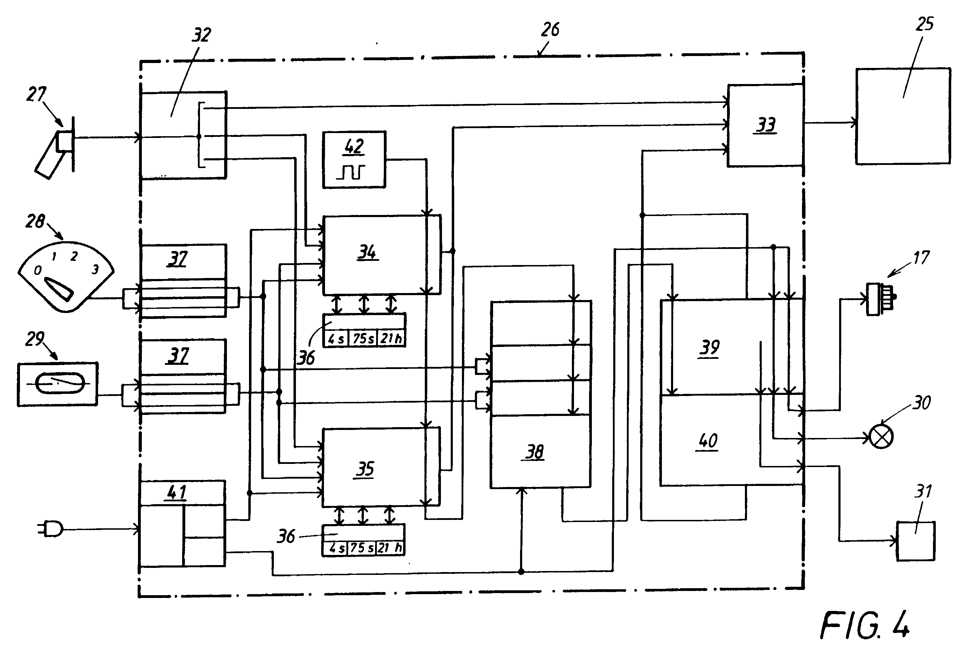

- Figur 4:: den Türsicherheitsbaustein in einem Blockschaltbild.
- Figur 5:: Funktionsschema des Türsicherheitsbausteines
- Figur 6:: Ablaufdiagramm der Überwachung des Hauptantriebes
- Figur 7:: Ablaufdiagramm des Funktionstestes des Hilfsantriebes.

Die Türflügel (10) und (11) der beispielsweise zweiflügeligen Schiebetür sind in bekannter Weise mittels Laufrollen an beispielsweise einer zum Kämpfer (12) gehörigen Schiene längsverschiebbar montiert. Der die Laufrollen lagernde Laufwagen weist außerdem weitere Stützrollen auf, die somit eine Absturzsicherung für jeden Türflügel bilden.

Die Betätigung der Türflügel (10) und (11) erfolgt bei dem dargestellten Ausführungsbeispiel über einen Riementrieb (13), bei dem es sich beispielsweise um einen endlosen Zahnriementrieb handeln kann, der auf der einen Seite um eine Antriebsscheibe (14) gelegt ist und auf der anderen Seite eine am Kämpfer (12) gelagerte Umlenkrolle (15) umgreift. Die Antriebsscheibe (14) ist mit einem Getriebe aufweisenden Antriebsmotor (16) über eine elektromagnetische Kupplung (17) drehmomentübertragend verbunden. Während der Türflügel (10) mit dem einen Trum des Riementriebes (13) in bekannter Weise beispielsweise über Laschen (18) in fester Verbindung steht, ist der Türflügel (11) mit dem anderen Trum des Riementriebes (13) über Laschen (19) fest verbunden, so daß die Türflügel beim Betreiben des Riementriebes (13) in entgegengesetzter Richtung bewegt werden. Am Boden sind die Türflügel (10) und (11) mit entsprechenden Bodengleitern (20) in bekannter Weise geführt.

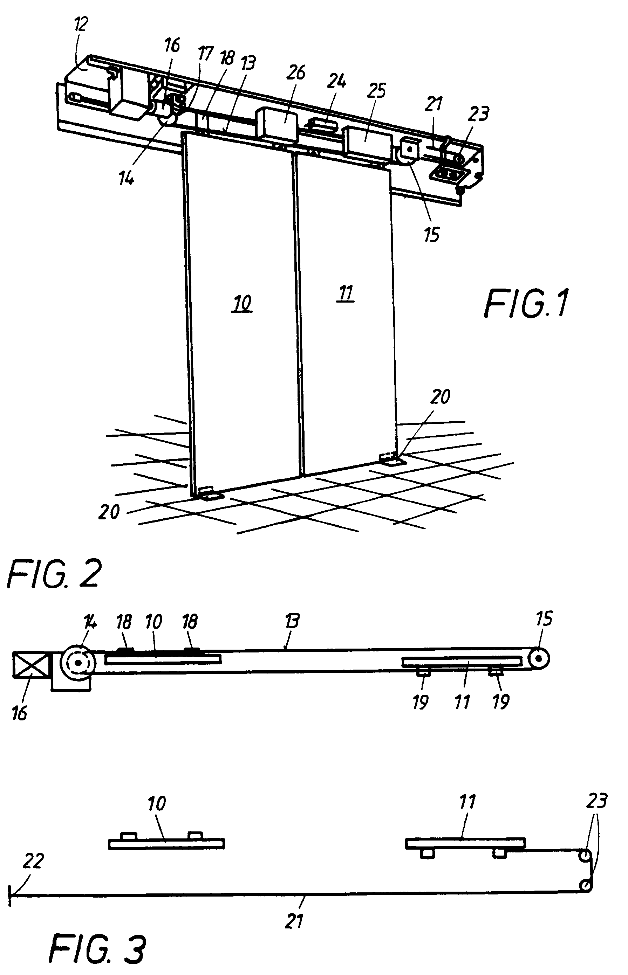

Außer dem in Figur 2 schematisch dargestellten und oben beschriebenen, einen endlosen Riementrieb (13) umfassenden Hauptantrieb sind die Türflügel auch über einen Hilfsantrieb bewegbar. Dieser Hilfsantrieb besteht im wesentlichen aus einem an einem Türflügel (beispielsweise Türflügel (11)) mit einem Endpunkt angreifenden elastischen Element (21), das mit seinem anderen Ende an einem Festpunkt (22) des Kämpfers (12) festgelegt ist. Bei durch den Antriebsmotor (16) erfolgter Schließung des Türflügels wird das über Umlenkrollen (23) geführte elastische Element (21) gespannt, so daß diesem bei geschlossenen Türflügeln (10) und (11) eine potentielle Energie innewohnt. Wenn daher beim Schließzustand der Schiebetür die elektromagnetische Kupplung (17) stromlos gestellt wird, so verfahren die Türflügel (10) und (11) aufgrund der Vorspannung des Elementes (21) in die aus Fig. 2 und 3 ersichtliche Offenstellung. Dabei versteht es sich, daß außer dem direkt vom elastischen Element (21) beaufschlagten Türflügel (11) auch der Türflügel (10) bewegt wird, da diese beiden Türflügel über den Riementrieb (13) miteinander verbunden sind. Die Schließlage der Türflügel (10) und (11) läßt sich durch eine Türverriegelung (24) bekannter Art sichern.

Zur Regelung der Bewegung der Türflügel (10) und (11) dient eine Standardsteuerung (25), die auf elektrischem Wege mit einem eine elektronische Zusatzsteuerung bildenden Türsicherheitsbaustein (26) verbunden ist. Dieser Türsicherheitsbaustein (26) ist zwischen einem Bewegungsmelder (27) (der beispielsweise als Radarmelder, Infrarotsender, Ultraschallsensor, Lichtschranke oder dgl. ausgebildet sein kann), einem Programmschalter (28) und einem Endschalter (29) einerseits sowie der Standardsteuerung (25), der elektromagnetischen Kupplung (17) und Anzeigeeinrichtungen (30) und (31) andererseits geschaltet. Dieser Türsicherheitsbaustein umfaßt eine Kopplerstufe (32), die einerseits mit dem Bewegungsmelder (27) und andererseits mit einer zum Türsicherheitsbaustein gehörenden Startlogik (33) unmittelbar verbunden ist, während weitere Verbindungen von der Kopplerstufe (32) zu einem ersten Logikkanal (34) und einem dazu parallel geschalteten zweiten Logikkanal (35) führen, wobei die Logikkanäle ebenfalls Elemente des Türsicherheitsbausteines (26) sind. Jedem Logikkanal (34) und (35) ist ein Timer (36) mit unterschiedlichen Schaltzeitkennungen zugegeben, die bei dem dargestellten Ausführungsbeispiel 4 Sekunden, 75 Sekunden und 21 Stunden dauern. Beide Logikkanäle (34) und (35) sind auch mit der Startlogik (33) verbunden. Der Programmschalter (28) ist über einen zum Türsicherheitsbaustein (26) gehörenden Eingangsfilter (37) einerseits mit beiden Logikkanälen (34) und (35) und andererseits mit einem mehrstufigen Fail-Save-Vergleicher (38) verbunden, der seinerseits mit den zwangsgeführten Relais (39) und (40) über Verbindungen verknüpft ist. Diese untereinander gekuppelten Relais (39) und (40) haben Ausgänge, die mit Der elektromagnetischen Kupplung (17) einerseits und den Anzeigeeinrichtungen (30) und (31) andererseits verschaltet sind. Auch der Endschalter (29) ist über einen weiteren Eingangsfilter (37) des Türsicherheitsbausteines (26) einerseits mit den Logikkanälen (34) und (35) und andererseits mit dem Fail-Save-Vergleicher (38) verbunden. Außerdem ist dem Türsicherheitsbaustein (26) noch eine Stromversorgung mit getrennten Stromkreisen (41) zugeordnet. Schließlich beinhaltet der Türsicherheitsbaustein (26) noch einen Taktgenerator (42), dessen Taktimpulse einerseits den Logikkanälen (34) und (35) mit ihren Timern (36) und andererseits auch dem Fail-Save-Vergleicher (38) zugeführt werden.

Der Programmschalter (28) und der Endschalter (29) sind redundant als Öffner und Schließer ausgebildet. Die von diesen Schaltern ausgehenden und dem Türsicherheitsbaustein zugeleiteten Impulse gehen über jeweils einen der Entstörung dienenden Eingangsfilter (37) auf die beiden Logikkanäle (34) und (35) sowie auf den Fail-Save-Vergleicher (38). Dieser vergleicht die jeweiligen Schaltstellungen des Öffners und Schließers miteinander, wobei eine Schaltergleichheit unmittelbar zur Fehlererkennung an den Anzeigeeinrichtungen (30) bzw. (31) ansteht und gleichzeitig die elektromagnetische Kupplung stromlos gestellt wird.

Der eigensichere Bewegungsmelder (27) überträgt seine Impulse auf die Logikkanäle (34) und (35) und auch unmittelbar als Ausgang auf die Startlogik (33). Die Startlogik (33) kann aber auch durch die beiden Logikkanäle (34) und (35) geschaltet werden.

Von dem den Systemtakt erzeugenden Taktgenerator (42) werden alle Zeitglieder abgeleitet. Dieser Takt pulst einen Gleichstrom als Haltestrom für die beiden zwangsgeführten Relais (39) und (40). Durch die beiden Logikkanäle (34) und (35) ist die Möglichkeit gegeben, den Takt zu unterbrechen und damit die zwangsgeführten Relais (39) und (40) zum Abfallen zu bringen. Die Kontakte dieser beiden Relais sind in Reihe geschaltet und unterbrechen den Stromkreis zur elektromagnetischen Kupplung (17). Außerdem dienen weitere Kontakte dieser Relais (39) und (40) zur Schaltung der Anzeigeeinrichtungen, wovon die Anzeigeeinrichtung (30) der optischen Anzeige und die Anzeigeeinrichtung (31) einer externen Fehlermeldung dienen. Mit Hilfe der Startlogik (33) können die Logikkanäle (34) und (35) Öffnungssignale zur Schiebetürsteuerung an die Standardsteuerung (25) ausgeben. Die beiden Logikkanäle (34) und (35) enthalten beim vorliegenden Ausführungsbeispiel jeweils das Programm in Form von GAL-Bausteinen, bei denen es sich um Programmlogiken handelt, deren interne Verbindung gesetzt oder gelöscht werden kann. Die Logikkanäle können ferner die jeweils erforderlichen Zeitglieder (36) enthalten.

Für die Erfüllung seiner Aufgaben benötigt der Türsicherheitsbaustein (26) als Eingangsinformationen die Stellung des Programmschalters (28), einen Endschalter (29), welcher die Türposition ab einer bestimmten Öffnungsweite anzeigt sowie den Bewegungsmelder (27). Die Ausgänge des Türsicherheitsbausteines sind der Anschluß für die elektromagnetische Kupplung (17), die Anschlüsse für die optische Anzeigeeinrichtung (30), für die fehlermeldende externe Anzeigeeinrichtung (31) und für die Weitergabe des Innenmelderpulses zur Standardsteuerung (25) der Schiebetür.

Die Schiebetür steht unter Funktionsbereitschaft, wenn die Netzspannung eingeschaltet und der Programmschalter (28) in Null-Stellung (Aus) gebracht worden ist. Dabei wird die elektromagnetische Kupplung (17) eingeschaltet. Durch Umschalten des Programmschalters (28) wird die Schiebetür aktiviert und der Türsicherheitsbaustein (26) startet durch seine Logikkanäle (34) und (35) und die diesen zugeschalteten Timer (36) eine kurze Wartezeit (4 S.) Diese Wartezeit gibt der Standardsteuerung (25) die Möglichkeit, währenddessen die Tür zu entriegeln. Nach Ablauf dieser Wartezeit startet der Funktionstest des Hilfsantriebes wie bereits zuvor beschrieben. Ein fehlerhafter Test kann durch Deaktivierung und anschließender Aktivierung der Schiebetür mittels des Programmschalters (28) wiederholt werden. Nach einem positiven Test wird, wenn der Programmschalter (28) in aktiver Stellung verbleibt, zyklisch nach Ablauf der im Timer (36) programmierten Zeit von 21 Stunden der Funktionstest des Hilfsantriebes selbsttätig wiederholt.

Während dieser gesamten aktivierten Phase der Schiebetür überwacht der Türsicherheitsbaustein (26) jede Öffnung auf einen Öffnungsimpuls des Bewegungsmelders (27) hin.

Der Türsicherheitsbaustein (26) dient als zusätzliche Steuereinheit einer automatischen Schiebetür. Die primären Aufgaben des Türsicherheitsbausteines sind:
1. Überwachung einer automatischen Schiebetür aus Öffnung oder Schließung nach einem Impuls des Bewegungsmelders hin
2. Selbsttätiger Funktionstest des Hilfsantriebes
3. Eigensicherheit der Überwachung von 1 und des Funktionstest von 2.

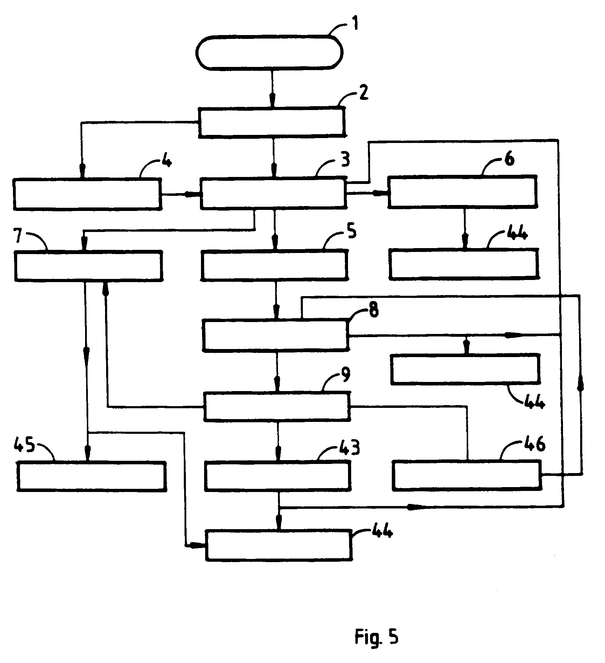

Für die Erfüllung dieser Aufgaben benötigt der Türsicherheitsbaustein wie bereits vorbeschrieben, die Eingangsvoraussetzungen des Programmschalters, Endschalters und des Bewegungsmelders. Der über den Programmablauf gesteuerte Türsicherheitsbaustein gibt selbst wieder Informationen an die elektromagnetische Kupplung und an die Fehleranzeige weiter. Das in Figur 5 dargestellte Ablaufschema des Türsicherheitsbausteines läuft wie folgt im einzelnen ab:
Im Startblock (1) ist die Netzspannung von dem Antrieb entfernt und die Kupplung ist nicht eingekuppelt. Mit Beginn der Netzspannung (2) gibt es zwei Möglichkeiten für den redundant ausgeführten Programmschalter. Wird der wie in Block 4 dargestellte Programmschalter auf Automatik geschaltet, so geht automatisch wie im Block 3 dargestellt, die Kupplung in die Einkuppelposition. Es kann aber auch, wie in Block 3 dargestellt worden ist, der Programmschalter in eine Nachtausstellung gebracht werden, was die gleiche Funktion der Kupplung auslöst. Mit dem Programmschalter in Automatikstellung wird im Block 5 die Wartezeit für die Entriegelung aktiviert. Im anschließenden Funktionstest (8) wird der Hilfsantrieb aktiviert. Ist der Hilfsantrieb in Ordnung, so wird über eine Verbindung dem Block (3) signalisiert, daß die Kupplung wieder eingeschaltet wird und der normale Betrieb der Automatik-Schiebetür aufrechterhalten werden kann. Liegt jedoch ein Fehler vor, so wird über die Fehlermeldung (44) gleichzeitig eine Meldung nach außen hin gegeben. Mit dem ordnungsgemäßen Ablauf des Hilfsantriebes wird auch im Anschluß daran an dem Block (9) eine Langzeittimeraktivierung erreicht. Diese Langzeitaktivierung ist für den im Normalfall nach einer vordefinierten Zeit neu anstehenden automatischen, intern ablaufenden Funktionstest des Hilfsantriebes notwendig. Ist jedoch diese Überwachung des Langzeittestes fehlerhaft, so wird im anschließenden Block (43) dieses an die Fehlermeldung (44) gemeldet und gleichzeitig wird eine Rückmeldung an den Block (3) der Kupplungseinschaltung gegeben. Wenn aus irgendeinem Fehlergrund die Zeit der Langzeit (9) abgelaufen ist, wird das Zeitglied (46) aktiviert und gibt eine Meldung an den Block des Hilfsantriebes. Dieser löst gleichzeitig dann einen Funktionstest des Hilfsantriebes aus, so daß auch bei Überschreitung der vorgegebenen Langzeit es gewährleistet ist, daß der Hilfsantrieb getestet wird und damit auch die Tür sicher geöffnet wird. Eine weitere Fehlermöglichkeit ist auch noch, daß nach Ablauf der Langzeit entweder der Programmschalter, Endschalter oder selbst der Türsicherheitsbaustein (26) defekt sind. In diesem Falle würde eine Meldung an den Block (7) ergehen, der wiederum eine Handentriegelung (45) auslösen würde und gleichzeitig eine Fehlermeldung an den Block (44) weitergibt. Diese gleiche Fehlerbeschreibung würde auch dann ausgelöst, wenn bereits im Block (3) erkannt wird, daß der Programmschalter (28) oder der Endschalter (29) oder der Türsicherheitsbaustein (26) defekt sind. Die vorbeschriebenen 'Blöcke' können auch als Programmschritte innerhalb des Ablaufprogrammes definiert werden.

Der Türsicherheitsbaustein (26), der diese vorbeschriebenen Funktionen ausführt, kann entweder diskret aufgebaut werden oder aber auch als voll integrierter Baustein zur Verfügung stehen.

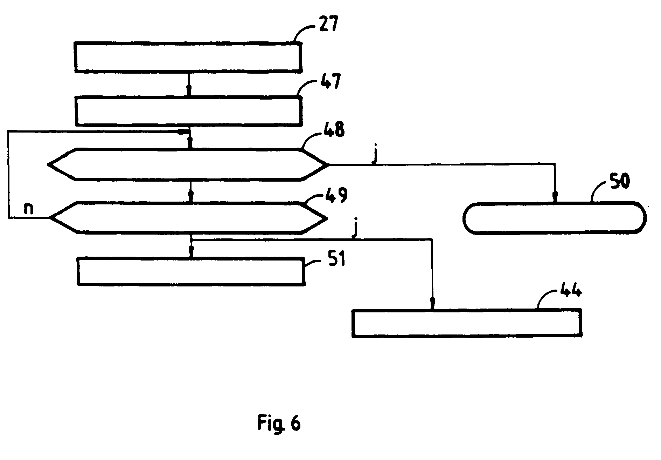

Der in Figur 6 dargestellte Ablauf der Überwachung des Hauptantriebes läuft wie folgt ab:
Der Bewegungsmelder (27) löst den Langzeitstart (47) aus. Dieses ist deshalb notwendig, um in einer bestimmten Zeit die Öffnung der Tür durchzuführen. Wird innerhalb dieser vorgegebenen Zeit der Endschalter überfahren, so meldet der Block (48) dieses an den Hauptantrieb (50). Damit ist der Hauptantrieb in Ordnung, und ein sicherer Betrieb der Tür ist gewährleistet. Wird der Endschalter (29) innerhalb der vorgegebenen Zeit nicht erreicht, so wird über den Block (51) der Befehl an die Kupplung gegeben, das ausgekuppelt werden muß. Gleichzeitig aber geht auch ein Befehl an die Fehlermeldung (44) und signalisiert somit den Fehler nach außen. Ist die Zeit abgelaufen, so wird auch gleichzeitig nochmal eine Rückmeldung an den Anfang gegeben, und es kann ein erneuter Versuch unternommen werden, die Position des Endschalters (48) zu überfahren.

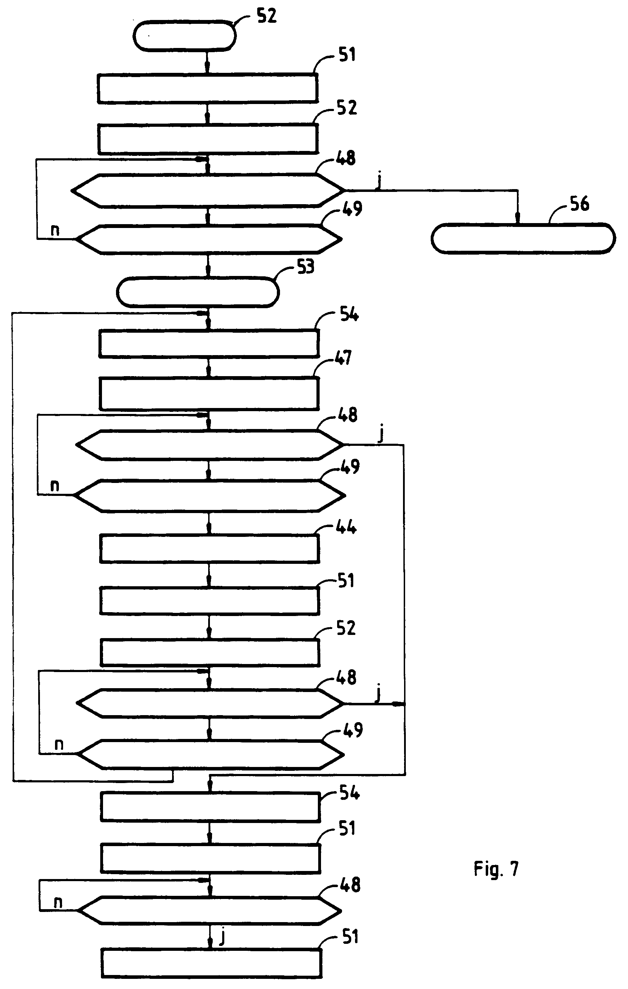

Der Figur 7 ist ein Ablaufdiagramm des Funktionstestes des Hilfsantriebes zu entnehmen. Über den Startbefehl (52) wird die Kupplung mit dem Kupplungsbefehl (51) dem Antriebsmotor (16) getrennt. Sobald die Kupplung (17) getrennt worden ist, wird der Hilfsantrieb in der Form wirksam, daß die gespeicherte Energie in dem Energiespeicher frei wird, und die Türflügel entsprechend der gewünschten Bewegung bewegt. Dieser Bewegungsablauf muß innerhalb einer vorgegebenen Zeit (55) abgelaufen sein. Diese Zeit ist deutlich kürzer als die in Block (47) angesprochene Langzeit. Wird innerhalb dieser vorgegebenen Zeit (55) der Endschalter überfahren, so wird über die Meldung (48) an den Antrieb gemeldet, daß der Hilfsantrieb (56) voll funktionsfähig ist. Wird innerhalb der vorgegebenen Kurzzeit (52) der Endschalter (29) nicht überfahren, so wird aus dem Programmblock (48) ein entsprechender Befehl des Zeitvergleiches (49) an den Anfang des Kurzzeitstartes (51) gegeben. Hierdurch wird erreicht, daß der gesamte Öffnungsvorgang bzw. Schließvorgang noch einmal durchgeführt werden kann. Ist der Test jedoch fehlerhaft ausgefallen, so wird dieser Fehler über den Block (53) gemeldet. Nun versucht die Programmsteuerung über den Hauptantrieb die Tür zu bewegen. Hierfür wird ein Kupplungsbefehl (54) gegeben, der die Kupplung (17) wieder mit dem Antriebsmotor (16) verbindet. Nun versucht der Türsicherheitsbaustein (26) über den Zeitstart (47) mit einer größeren Zeiteinheit die Tür zu bewegen. Geschieht dieses innerhalb der vorgegebenen Zeit, so wird über die Endschalterüberwachung (48) ein Kupplungsbefehl (54) zum Einkuppeln der Kupplung (17) mit dem Antriebsmotor (16) ausgeführt. In diesem Falle ist der Test ordnungsgemäß abgelaufen und die Tür ist ganz offen. Wird jedoch der Endschalter (29) nicht in der vorgegebenen Langzeit (47) erreicht bzw. überfahren, so wird über den Zeitvergleich (49) eine Meldung zurück an den erneuten Start der Langzeit gegeben. Gleichzeitig geht auch eine Fehlermeldung nach außen an Block (44), der signalisiert, daß ein Fehler vorliegt. Des gesamte Vorgang läuft noch einmal ab. Anschließend wird über den Kupplungsbefehl (51) die Kupplung (17) wieder von dem Antriebsmotor (16) getrennt, und der Hilfsantrieb versucht nun, die Türflügel innerhalb der Kurzzeit (52) zu bewegen. Wird hierbei der Endschalter überfahren, so geht ein Befehl (48) an die Kupplung, und es wird der Normalbetrieb aufgenommen. Wird jedoch der Endschalter (48) nicht innerhalb der vorgegebenen Zeit (52) überfahren, so gibt der Zeitvergleich (49) eine erneute Meldung an den Hilfsantrieb, um den gleichen Bewegungsablauf noch einmal durchzuführen. Gleichzeitig, wenn der Zeitablauf (49) nicht beim zweiten Anlauf das Türelement bewegen konnte, so wird auch in diesem Falle erneut ein Versuch unternommen, mittels des Hauptantriebes die Tür zu öffnen. Wie in dem Programmablauf dargestellt, versuchen alternierend entweder der Hilfsantrieb oder aber der Hauptantrieb das Türelement zu bewegen. Dieser Versuch wird so lange fortgesetzt, bis sich das Türelement entsprechend bewegt hat und eine Meldung das erfolgreiche Öffnen bzw. Schließen des Elementes anzeigt. Da in einem solchen Falle innerhalb der Anlage ein Fehler vorliegt, ist es notwendig, den gesamten reibungslosen Ablauf der Schiebetüranlage neu zu starten, was manuell gemacht werden muß.

Alle durchzuführenden Tests entweder mit dem Hilfsantrieb bzw. mit dem Hauptantrieb müssen, wie bereits zuvor dargestellt ist, innerhalb einer bestimmten Zeit ablaufen. Sollten die Tests nicht innerhalb dieser Zeit ablaufen, so deutet das auf eine Schwergängigkeit bzw. auf einen Störfall hin. In solch einem Falle wird auf jeden Fall die Tür in die sichere Position gebracht in der für die begehenden Personen keine Gefahr ausgeht. Diese heißt bei einer Flucht- und Rettungswegtür, daß die Tür in der Offenposition stehen bleibt und gleichzeitig eine Störmeldung an eine Zentrale abgibt. Diese Tests laufen bei Türen im Dauerbetrieb auch kontinuierlich ab. Der Zeitraum für dien Testlauf kann durch entsprechende Programmierung vorgegeben werden.

Bei der vorliegenden Steuerung wird jeder Bewegungsvorgang vom Bewegungsmelder bis zur Türbewegung überwacht. Erkennt der Bewegungsmelder eine Bewegung, so gibt er dem Türsicherheitsbaustein die Information, z.B. 'Tür öffnen'. Dieser gibt die Information weiter an die Steuerung des Hauptantriebes und erwartet, daß die Tür innerhalb einer vorgegebenen Zeit sich öffnet. Sollte der Hauptantrieb nicht in der Lage sein, die Öffnung durchzuführen, so schaltet der Türsicherheitsbaustein (26) auf den Hilfsantrieb automatisch um und gibt gleichzeitig eine Störmeldung heraus. Sollte die Bewegungsrichtung der Tür durch ein Hindernis (z.B. einen Einkaufswagen) blockiert sein und eine Störmeldung dadurch vorliegen, so muß die Anlage nach Beseitigung des Hindernisses wieder in Betrieb genommen werden. Hierfür muß der Programmschalter entsprechend betätigt werden und anschließend auf die gewünschte Betriebsart eingestellt werden. Automatisch löscht sich die Störmeldung, und es wird anschließend sofort ein Selbsttest der automatischen Schiebetür durchgeführt. Neben dem Programmschalter kann auch noch ein weiterer Notaufschalter vorhanden sein, welcher bei Betätigung die Türflügel z.B. bei einer Flucht- und Rettungswegtür durch ein Notöffnungsmodul öffnet. Gleichzeitig gibt auch in diesem Fall der Türsicherheitsbaustein (26) nach Umschaltung auf den Hilfsantrieb eine Störmeldung aus. Durch eine entsprechende Entriegelung des Not-Aus-Schalters wird die Stormeldung gelöscht, und die Türanlage ist wieder voll betriebsbereit. Bei einem Netzausfall werden die Türflügel an der Flucht- und Rettungswegtür bei Stromausfall sofort durch den Hilfsantrieb geöffnet. Gleichzeitig wird auch wieder eine Störmeldung ausgegeben. Nach erfolgter manueller Einschaltung über den Programmschalter (28) wird auch hier ein Selbsttest des Hilfsantriebes wieder durchgeführt.

Durch diese Maßnahmen ist gewährleistet, daß die vorliegende Konstruktion in Verbindung mit dem Programmablauf einen sicheren Betrieb einer Flucht- und Rettungswegtür bzw. einer normalen Automatik-Schiebetür gewährleistet.

### Bezugszeichenverzeichnis

- 1: Netz aus (Start)
- 2: Netz ein
- 3: Kupplung ein
- 4: Automatik
- 5: Wartezeit
- 6: Netzausfall
- 7: Endschalter oder TSB defekt
- 8: Hilfsantrieb fehlerhaft
- 9: Langzeitstart
- 10: Türflügel
- 11: Türflügel
- 12: Kämpfer
- 13: Riementrieb
- 14: Antriebsscheibe
- 15: Umlenkrolle
- 16: Antriebsmotor
- 17: Kupplung, elektromagnetisch
- 18: Laschen
- 19: Laschen
- 20: Bodengleiter
- 21: elastisches Element
- 22: Festpunkt
- 23: Umlenkrolle
- 24: Türverriegelung
- 25: Standardsteuerung
- 26: Türsicherheitsbaustein
- 27: Bewegungsmelder
- 28: Programmschalter
- 29: Endschalter
- 30: Anzeigeeinrichtung, optisch
- 31: Anzeigeeinrichtung, extern
- 32: Kopplerstufe
- 33: Startlogik
- 34: Logikkanal 1
- 35: Logikkanal 2
- 36: Timer
- 37: Eingangsfilter
- 38: Fail-Save-Vergleicher
- 39: Relais, zwangsgeführt
- 40: Relais, zwangsgeführt
- 41: Stromversorgung
- 42: Taktgenerator
- 43: Überwachung Hauptantrieb
- 44: Fehlermeldung
- 45: Handentriegelung
- 46: Zeitglied
- 47: Zeitstart
- 48: Endschalter überfahren
- 49: Zeitvergleich
- 50: Hauptantrieb
- 51: Kupplungsbefehl
- 52: Start
- 53: Testfehler
- 54: Kupplungsbefehl
- 55: Zeit Hilfsantrieb
- 56: Hilfsantrieb

## Patentansprüche

1. Schiebetür, bei der wenigstens ein Flügel (10, 11) mit einem mit einem Getriebemotor (16) über eine zwischengeschaltete elektromagnetische Kupplung (17) angetriebenen Riementrieb (13) gekuppelt ist, wobei der Flügel (10, 11) außerdem mit einem durch die Schließbewegung des Flügels mit Energie versorgten Hilfsantrieb (56) verbunden ist, durch den infolge Stromlosstellung der elektromagnetischen Kupplung (17) der Flügel (10, 11) in Offenstellung überführbar ist, mit wenigstens einem Programmschalter (28), wenigstens einem Bewegungsmelder (27) und einem Endschalter (29) zur Aktivierung einer Standardsteuerung (25) zur automatischen Bewegung des Türflügels sowie mit einer elektronischen Zusatzsteuerung in Form eines Türsicherheitsbausteines (26), dessen Steuerung nach einem Programmablauf durchgeführt wird und der zwischen Bewegungsmelder (27), Programmschalter (28) und Endschalter (29) einerseits sowie der Standardsteuerung (25), der elektromagnetischen Kupplung (17) und Anzeigeeinrichtungen (30, 31) andererseits geschaltet ist, wobei der Türsicherheitsbaustein (26) eine mit dem Bewegungsmelder (27) verbundene Kopplerstufe (32) aufweist, die einerseits mit einer Startlogik (33) direkt und andererseits über zwei jeweils mit einem Timer (36) ausgestattete Logikkanäle (34, 35) sowie mit der Startlogik (33) verbunden ist, und wobei sowohl der Programmschalter (28) als auch der Endschalter (29) einerseits über die Logikkanäle (34, 35) mit der Startlogik (33) und andererseits über einen mehrstufigen Fail-Safe-Vergleicher (38) und nachgeschalteten Relais (39, 40) mit der elektromagnetischen Kupplung (17) und den Anzeigeeinrichtungen (30, 31) verbunden sind sowie mit einem mit den Logikkanälen (34, 35) und mit dem Fail-Safe-Vergleicher (38) verbundenen, den Systemtakt erzeugenden Taktgenerator (42).

2. Schiebetür nach Anspruch 1, **dadurch gekennzeichnet,** daß der Türsicherheitsbaustein (26) mit Eingangsfiltern (37) ausgestattet ist, wovon der eine Eingangsfilter dem Programmschalter (28) nachgeschaltet und den Logikkanälen (34) und (35) vorgeschaltet und der andere Eingangsfilter zwischen Endschalter (29) und Logikkanäle (34) und (35) sowie Fail-Safe-Vergleicher (38) geschaltet ist.

3. Schiebetür nach Anspruch 1, **dadurch gekennzeichnet,** daß der Türsicherheitsbaustein (26) mit einer separaten Stromversorgung ausgestattet ist.

4. Schiebetür nach Anspruch 1 bis 3, **dadurch gekennzeichnet,** daß der Türsicherheitsbaustein (26) mit diskreten Bauteilen aufgebaut ist.

5. Schiebetür nach den Ansprüchen 1 bis 3, **dadurch gekennzeichnet,** daß der Türsicherheitsbaustein (26) als integrierte Schaltung vorhanden ist.

6. Schiebetür nach Anspruch 1, **dadurch gekennzeichnet,** daß der Programmablauf des Türsicherheitsbausteines (26) eine Überwachung des Hauptantriebes (50) beinhaltet.

7. Schiebetür nach Anspruch 1 und 6, **dadurch gekennzeichnet,** daß über den Bewegungsmelder (27) ein Zeitstartbefehl (47) ausgelöst wird, innerhalb dessen Zeit der vorhandene Endschalter (29) überfahren werden muß.

8. Schiebetür nach den Ansprüchen 1, 6 und 7, **dadurch gekennzeichnet,** daß bei Ablauf der Zeitvorgabe (47) der Hauptantrieb (50) über die elektromagnetische Kupplung (17) von dem Antriebsmotor (16) getrennt wird.

9. Schiebetür nach Anspruch 1, **dadurch gekennzeichnet,** daß der Programmablauf über den Türsicherheitsbaustein (26) einen Funktionstest des Hilfsantriebes (56) durchführt.

10. Schiebetür nach den Ansprüchen 1 und 9, **dadurch gekennzeichnet,** daß bei einer Störungsmeldung des Hilfsantriebes (56) automatisch auf den Hauptantrieb (50) umgeschaltet wird und die Antriebseinheit ein Bewegen der Türflügel (10) und/oder (11) unternimmt, wobei dieser Vorgang so lange wiederholt wird, bis der Türflügel (10) und/oder (11) entweder entsprechend des Programmablaufes geöffnet bzw. sicher geschlossen ist.

11. Schiebetür nach einem oder mehreren der vorhergenannten Ansprüche, **dadurch gekennzeichnet,** daß nach einem aufgetretenen Störfall und anschließendem Neustart der Türsicherheitsbaustein (26) einen Selbsttest der gesamten Türanlage durchführt.

12. Schiebetür nach einem oder mehreren der vorgenannten Ansprüche, **dadurch gekennzeichnet,** daß eine akustische und optische Anzeige eines Fehlers durchgeführt wird.

## Claims

1. A sliding door with at least one leaf (10,11) coupled to a belt drive (13) driven by a drive motor (16) via an interposed electromagnetic coupling (17), wherein the leaf (10, 11) is also connected to an auxiliary drive (56) which is is supplied with energy by the closure movement of the leaf and which in the de-energized condition of the electromagnetic coupling (17) can be moved into an open position, and with at least one program switch (28), at least one motion detector (27) and a limit switch (29) for activating a standard control (25) for automatically moving the leaf and an added electronic control in the form of a safety component (26) to be controlled in accordance with the program procedure structure and connected on the one hand to the motion indicator (27), the program switch (28) and limit switch (29) and on the other hand to the standard control (25), the electromagnetic coupling (17) and display devices (30,31), wherein the safety component (26) is provided with a coupler stage (32) associated with the motion detector (27) which on the one hand is directly connected to a start logic ( 33) and on the other hand connected by way of two logic channels (34,35) each including a timer (36), and wherein both the program switch (28) and the limit switch (29) are connected via the logic channels (34,35) to the start logic (33) and via a multi-stage fail-safe comparator (38) and a relay (39,40) disposed downstream of the electromagnetic coupling (17) and the display devices (30, 31) and wherein the logic channels (34,35) and the fail-safe comparator (38) are connected to a clock generator (42) for generating the system clock.

2. A sliding door according to claim 1 characterized in that the door safety component (26) is provided with input filters (37) of which one input filter is connected downstream of the program switch (28) and upstream of the logic channels (34) and (35) and the other input filter is connected between the limit switch (29) and the logic channels (34) and (35) as well as the fail-safe comparator (38).

3. A sliding door according to claim 1 characterized in that the door safety component (26) is provided with a separate power supply.

4. A sliding door according to claims 1 to 3 characterized in that the door safety component (26) consists of discrete component parts.

5. A sliding door according to claims 1 to 3 characterized in that the door safety component (26) is in the form of an integrated circuit.

6. A sliding door according to claim 1 characterized in that execution of the program of the door safety component (26) includes monitoring of the main drive (50).

7. A sliding door according to claim 1 and 6 characterized in that a clock start command (47) is triggered by the motion detector (27) and travelling beyond the limit switch (29) must occur within the time interval of the clock.

8. A sliding door according to claims 1,6 and 7 characterized in that on elapse of the time (47) interval the main drive (50) is separated from the drive motor (16) via the electromagnetic coupling (17).

9. A sliding door according to claim 1 characterized in that during execution of the program of the safety component (26) a functional test of the auxiliary drive (56) is performed.

10. A sliding door according to claims 1 and 9 characterized in that in the event of a fault indication in respect of the auxiliary drive (56) the arrangement is automatically switched over to the main drive (50) and the drive unit effects movement of the door leaves (10 and/or (11), that the procedure is being repeated until the leaf is either opened or securely closed in accordance with the programmed sequencies.

11. A sliding door according to one more of the preceding claims characterized in that after a fault situation has occured and after subsequent restarting, the door safety component (26) performs self-testing of the entire door installation.

12. A sliding door according to one or more of the preceding claims characterized in that failures are indicated by an aural alarm and visual display.

## Revendications

1. Porte à glissière dans laquelle au moins un panneau est accouplé à un entraînement à courroie (13) mené, par un moteur d'entraînement (16) à l'intermédiaire d'un accouplement électromagnétique (17), le panneau (10 ou 11) est en outre relié, à un entraînement auxiliaire (56) alimenté en énergie par le déplacement de glissement du panneau et qui lorsque l'accouplement électromagnétique n'est pas alimenté en courant peut être déplacé en position ouverte et avec au moins un commutateur programmé (28), au moins un dispositif de signalisation de déplacement (27) et un contacteur de fin de course (29) pour l'activation d'une commande normalisée (25) pour le déplacement automatique du panneau et une commande électronique supplémentaire sous forme d'un module de sécurité de porte (26) dont la commande est effectuée suivant le déroulement d'un programme et qui est associé d'une part au dispositif de signalisation de déplacement (27), le commutateur programmé et le contacteur de fin de course (29) et d'autre part à la commande normalisée (25), l'accouplement électro-magnétique (17) ainsi que des dispositifs d'affichage (30,31), le module de sécurité de porte (26) présentant un étage de couplage (32) relié au dispositif de signalisation de déplacement (27) qui est relié à une logique de mise en route (33), d'une part directement et d'autre part relié via deux canaux logiques (34, 35), tous deux équipés d'une horloge (36) le commutateur programmé (28) ainsi que le contacteur de fin de course (29) sont reliés d'une part à la logique de mise en marche (33) via les canaux logiques (34,35) et via un comparateur Fail-Safe (38) à plusieurs étages et un relais (39, 40) prévus en aval de l'accouplement électro-magnétique et le comparateur Fail-Safe (38), sont reliés à une horloge (42) générant les impulsions de système.

2. Porte à glissière selon la revendication 1, caractérisé en ce que le module de sécurité de porte (26) est équipé de filtres d'entrée (37), dont l'un de ces filtres d'entrée est connecté en aval du commutateur programmé (28) et en amont des canaux logiques (34) et (35) et l'autre filtre d'entrée est connecté au commutateur de fin de course (29) et aux canaux logiques (34) et (35) ainsi qu'au comparateur Fail-Safe (38).

3. Porte à glissière selon la revendication 1, caractérisé en ce que le module de sécurité de porte (26) est équipé d'une alimentation en courant séparé.

4. Porte à glissière selon les revendications 1 à 3, caractérisé en ce que le module de sécurité de porte (26) est constitué de modules distincts.

5. Porte à glissière selon les revendications 1 à 3, caractérisée en ce que le module de sécurité de porte (26) est prévu comme un circuit intégré.

6. Porte à glissière selon la revendication 1, caractérisé en ce que les étapes de déroulement du programme du module de sécurité de porte (26) comprennent une surveillance de l'entraînement principal (50).

7. Porte à glissière selon les revendications 1 et 6, caractérisée en ce qu'un ordre de mise en marche temporisé est émis par le dispositif de signalisation de déplacement (27) à l'intérieur de la période pendant laquelle le commutateur de fin de course (29) doit être dépasse.

8. Porte à glissière selon les revendication 1, 6 et 7, caractérisée en ce que, à la fin de la période de temps (47), l'entraînement principal (50) est séparé du moteur d'entraînement (16) par l'accouplement électro-magnétique (17).

9. Porte à glissière selon la revendication 1, caractérisée en ce que le déroulement du programme du module de sécurité de porte (26) fait effectuer un test de fonctionnement de l'entraînement auxiliaire (56).

10. Porte à glissière selon les revendications 1 et 9, caractérisée en ce que, en cas de signalisation d'une panne de l'entraînement (56), il se produit une commutation automatique sur l'entraînement principal (50) et l'unité d'entraînement effectue un déplacement du panneau de porte (10) et/ou (11), cette procédure étant répétée jusqu'à ce que le panneau (10 et/ou 11) soit ouvert ou fermé, de manière sûre, en fonction du déroulement du programme.

11. Porte à glissière selon l'une ou plusieurs des revendications précédentes, caractérisée en ce que, après une panne et la remise en route qui suit, le module de sécurité de porte (26) effectue une autovérification de l'ensemble de l'installation de porte.

12. Porte à glissière selon l'une ou plusieurs des revendications précédentes, caractérisée en ce qu'une alarme sonore et optique est mise en oeuvre en cas de défaut.
